(19) Europäisches Patentamt
European Patent Office
Office européen des brevets

(11) **EP 4 190 843 A1**

(12) **EUROPEAN PATENT APPLICATION**
published in accordance with Art. 153(4) EPC

(43) Date of publication:
**07.06.2023 Bulletin 2023/23**

(21) Application number: **21907142.0**

(22) Date of filing: **17.12.2021**

(51) International Patent Classification (IPC):
*C08J 3/24* (2006.01)    *C08J 3/12* (2006.01)
*C08J 3/075* (2006.01)    *C08J 9/00* (2006.01)
*C08J 9/08* (2006.01)    *C08F 20/06* (2006.01)
*C08K 3/36* (2006.01)    *C08K 5/098* (2006.01)

(52) Cooperative Patent Classification (CPC):
**C08F 20/06; C08J 3/075; C08J 3/12; C08J 3/24;**
**C08J 9/00; C08J 9/08; C08K 3/36; C08K 5/098**

(86) International application number:
**PCT/KR2021/019249**

(87) International publication number:
**WO 2022/131838 (23.06.2022 Gazette 2022/25)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **18.12.2020  KR 20200178431**
**16.12.2021  KR 20210180490**

(71) Applicant: **Lg Chem, Ltd.**
**Seoul 07336 (KR)**

(72) Inventors:
• **RYU, Jihye**
**Daejeon 34122 (KR)**

• **SOHN, Jungmin**
**Daejeon 34122 (KR)**
• **LEE, Hyemin**
**Daejeon 34122 (KR)**
• **HAN, Chang Hun**
**Daejeon 34122 (KR)**
• **AHN, Taebin**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **SUPER ABSORBENT POLYMER AND PREPARATION METHOD THEREOF**

(57)    The present disclosure relates to a super absorbent polymer and a method for preparing the same. More specifically, it relates to a super absorbent polymer having an aspect ratio of particles above a certain level with large roughness, thereby exhibiting an improved absorption rate, and to a method for preparing the same.

【FIG. 1】

EP 4 190 843 A1

**Description**

[TECHNICAL FIELD]

Cross-reference to Related Application

This application claims the benefit of Korean Patent Applications No. 10-2020-0178431 filed on December 18, 2020 and No. 10-2021-0180490 filed on December 16, 2021 with the Korean Intellectual Property Office, the disclosures of which are incorporated herein by reference in their entirety.

The present disclosure relates to a super absorbent polymer and a method for preparing the same. More specifically, it relates to a super absorbent polymer having an excellent absorption rate and absorption performance together with a high aspect ratio, and a method for preparing the super absorbent polymer.

[BACKGROUND OF ART]

A super absorbent polymer (SAP) is a type of synthetic polymeric material capable of absorbing 500 to 1000 times its own weight of moisture. Various manufacturers have denominated it with different names, such as SAM (Super Absorbency Material), AGM (Absorbent Gel Material), and the like. Such super absorbent polymers started to be practically applied in sanitary products, and they are now being widely used not only for hygiene products, but also for water retaining soil products for gardening, water stop materials for the civil engineering and construction, sheets for raising seedling, fresh-keeping agents for food distribution fields, materials for poultices, or the like.

These super absorbent polymers have been widely used in the field of hygienic materials such as diapers or sanitary napkins. In such hygienic materials, the super absorbent polymer is generally contained in a state of being spread in the pulp. In recent years, however, continuous efforts have been made to provide hygienic materials such as diapers having a thinner thickness. As a part of such efforts, the development of so-called pulpless diapers and the like in which the pulp content is reduced or pulp is not used at all is being actively advanced.

In the sanitary products such as pulpless diapers with a reduced pulp content or without pulp, the super absorbent polymer should not only function as an absorbent for absorbing liquids such as urine, but also play a role of pulp. Therefore, it is required to exhibit a fast absorption rate as well as excellent absorption performance.

In order to prepare a super absorbent polymer having such an improved absorption rate, a method of improving a specific surface area by introducing a pore structure into the super absorbent polymer is mainly used. Specifically, in order to improve the specific surface area of the super absorbent polymer, a foaming agent may be used to generate bubbles or a gas such as carbon dioxide gas, air, or nitrogen gas may be injected in the polymerization step. However, since bubbles are unstable in the neutralization solution, when a foam stabilizer capable of capturing these bubbles is not used, the bubbles come out of the neutralization solution, making it impossible to prepare a super absorbent polymer having a pore structure. In addition, when the foam stabilizer is used in excess, there has been a problem in that general physical properties of the super absorbent polymer are deteriorated.

Accordingly, there is a continuous demand for the development of a super absorbent polymer having a fast absorption rate while maintaining basic absorbency.

[DETAILED DESCRIPTION OF THE INVENTION]

[Technical Problem]

Accordingly, the present disclosure relates to a super absorbent polymer having an aspect ratio of particles above a certain level with large roughness, thereby exhibiting an improved absorption rate, and to a method for preparing the same.

[Technical Solution]

In order to solve the above problems, there is provided a super absorbent polymer, including

a powder-type base resin including a cross-linked polymer of an acrylic acid-based monomer having at least partially neutralized acidic groups and an internal cross-linking agent; and
a surface cross-linked layer formed by further cross-linking the cross-linked polymer using a surface cross-linking agent on the base resin,
wherein the super absorbent polymer satisfies the following properties of

i) an average value of an aspect ratio (A/R), which is a ratio of the shortest diameter of particles to the longest diameter of particles measured for particles having a particle diameter of 300 $\mu$m to 600 $\mu$m, is 0.75 or more, and an average value of convexity calculated by the following Equation 1 is 0.9 or less, and
ii) a vortex time at 24.0 °C is 60 seconds or less:

[Equation 1]

Convexity = convex hull perimeter/actual particle perimeter

in Equation 1,
the convex hull perimeter is a length of an elastic band when it is assumed that an image obtained by capturing a 3D image of a 3D particle to be measured as a 2D image is surrounded by an imaginary elastic band extending around the outline, and
the actual particle perimeter is an actual perimeter of an image obtained by capturing a 3D image of a 3D particle to be measured as a 2D image.

In addition, there is also provided a method for preparing a super absorbent polymer, including the steps of:

preparing a monomer composition containing an acrylic acid-based monomer having at least partially neutralized acidic groups, and an internal cross-linking agent, (step 1);
preparing a hydrogel polymer by cross-linking polymerization of the monomer composition in the presence of an aqueous dispersion of hydrophobic particles and a carbonate-based foaming agent (step 2);
forming a powder-type base resin by drying and pulverizing the hydrogel polymer (step 3); and
preparing a super absorbent polymer after forming a surface cross-linked layer by further cross-linking the surface of the base resin in the presence of a surface cross-linking agent (step 4),
wherein the aqueous dispersion of hydrophobic particles is a colloidal solution in which hydrophobic particles having an average particle diameter of 0.2 $\mu$m to 50 $\mu$m are dispersed, and
the super absorbent polymer to be prepared satisfies the following properties of

i) an average value of an aspect ratio (A/R), which is a ratio of the shortest diameter of particles to the longest diameter of particles measured for particles having a particle diameter of 300 $\mu$m to 600 $\mu$m, is 0.75 or more, and an average value of convexity calculated by the Equation 1 is 0.9 or less, and
ii) a vortex time at 24.0 °C is 60 seconds or less.

[ADVANTAGEOUS EFFECTS]

The super absorbent polymer of the present disclosure has an average value of an aspect ratio of particles of 0.75 or more to have a shape close to a spherical shape while having large surface roughness, thereby being composed of particles having an average value of convexity of 0.9 or less. Thus, an improved absorption rate can be achieved. In addition, the super absorbent polymer may be prepared by introducing hydrophobic particles having a predetermined average particle diameter in the form of an aqueous dispersion, and the use of the hydrophobic particles with a specific size dispersed in water can effectively capture the generated carbon dioxide. Accordingly, small and uniform pores are formed on the surface of the super absorbent polymer, which can increase the specific surface area, thereby improving the absorption rate of the super absorbent polymer to be prepared.

[BRIEF DESCRIPTION OF THE DRAWINGS]

FIG. 1 is a SEM image of the super absorbent polymer prepared in Example 1.
FIG. 2 is a SEM image of the super absorbent polymer prepared in Comparative Example 1.
FIG. 3 is a SEM image of the super absorbent polymer prepared in Comparative Example 2.
FIG. 4 shows Sample Dispersion Unit setting values in morphologi 4 of Malvern Panalytical.
FIG. 5 shows Illumination setting values in morphologi 4 of Malvern Panalytical.
FIG. 6 shows Optics Selection setting values in morphologi 4 of Malvern Panalytical.
FIG. 7 shows Scan Area setting values in morphologi 4 of Malvern Panalytical.
FIG. 8 shows Particle Filtering setting values in morphologi 4 of Malvern Panalytical.

[DETAILED DESCRIPTION OF THE EMBODIMENTS]

The terminology used herein is for the purpose of describing particular embodiments only and is not intended to limit the invention. The singular forms are intended to include the plural forms as well, unless the context clearly indicates otherwise. It will be further understood that the terms "include", "have", or "possess" when used in this specification, specify the presence of stated features, steps, components, or combinations thereof, but do not preclude the presence or addition of one or more other features, steps, components, or combinations thereof.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

In addition, the terminologies are used merely to refer to specific embodiments, and are not intended to restrict the present disclosure. Singular expressions of the present disclosure may include plural expressions unless they are differently expressed contextually.

The terminology "polymer" in the present disclosure is in a state in which a water-soluble ethylene-based unsaturated monomer is polymerized, and may include all moisture content ranges, or all particle diameter ranges. Among the polymers, a polymer having a moisture content of about 40 wt% or more after polymerization and before drying may be referred to as a hydrogel polymer, and particles in which the hydrogel polymer is pulverized and dried may be referred to as a cross-linked polymer.

In addition, the terminology "super absorbent polymer particle" refers to a particulate material containing a cross-linked polymer in which an acrylic acid-based monomer having at least partially neutralized acidic groups is polymerized and cross-linked by an internal cross-linking agent.

In addition, the terminology "super absorbent polymer" is used to encompass all of a cross-linked polymer in which an acrylic acid-based monomer having at least partially neutralized acidic groups is polymerized or a base resin in the form of powder consisting of super absorbent polymer particles in which the cross-linked polymer is pulverized, and the cross-linked polymer or the base resin further processed, for example, surface cross-linking, fine reassembling, drying, pulverization, classification, etc., to be in a state suitable for commercialization, depending on the context. Accordingly, the terminology "super absorbent polymer " may be interpreted as including a plurality of super absorbent polymer particles.

In addition, the terminology "average diameter" of pores refers to a median of the longest diameter values of each of the plurality of pores included in the super absorbent polymer. This is to make it less affected by outliers compared to the simple average.

In order to prepare a super absorbent polymer having a fast absorption rate, the specific surface area in the super absorbent polymer particles needs to be increased. Accordingly, in order to prepare a super absorbent polymer having a high specific surface area, a method of forming a plurality of pores in the super absorbent polymer by inducing a foaming process during the manufacturing process or a method of mechanically modifying the super absorbent polymer has been used. In particular, the size of the formed foam varies depending on how the foaming mechanism is controlled, and thus the shape of final particles after pulverization is changed. In order to increase the specific surface area, it is advantageous to have a small aspect ratio at the same particle size. However, when the aspect ratio becomes smaller than a certain level, the absorption rate increases, but a balance of other properties such as water retention capacity and absorbency under pressure deteriorates. Therefore, it is necessary to implement a foaming mechanism capable of increasing the specific surface area of particles while achieving an aspect ratio of particles above a certain level.

Accordingly, the present inventors have confirmed that when the particles of the super absorbent polymer are close to a spherical shape, that is, have an aspect ratio of a certain level or higher, and increase the roughness of the particle surface by forming pores with an effective size on the particle surface to increase the specific surface area at the same time, the absorption rate and absorption performance of the super absorbent polymer can be simultaneously improved, thereby completing the present invention.

More specifically, as a result of diligent efforts to quantify the shape of super absorbent polymer particles affecting the absorption rate and absorption performance, the aspect ratio was considered as a parameter for determining whether the super absorbent polymer particles have a spherical shape or not, and the convexity was considered as a parameter for determining the surface roughness of the super absorbent polymer particles. In addition, it has been confirmed that when aspect ratio has a value greater than or equal to a certain level and convexity has a value less than or equal to a certain level, the super absorbent polymer can exhibit a fast absorption rate and an improved balance between water retention capacity and absorbency under pressure.

Such a super absorbent polymer may be prepared by using an aqueous dispersion containing hydrophobic particles as a foam stabilizer instead of a conventional foam stabilizer. Specifically, when hydrophobic particles having an average particle diameter of 0.2 $\mu$m to 50 $\mu$m are added in the form of an aqueous dispersion in the polymerization step of the monomer, the hydrophobic particles dispersed in water act as a seed to effectively capture bubbles without adding a separate foam stabilizer. Accordingly, it is possible to prepare a super absorbent polymer having a pore structure in which small and uniformly shaped pores are uniformly distributed over the entire area of the cross-linked polymer.

More specifically, in the method for preparing a super absorbent polymer of one embodiment, the two types of hydrophobic particles are not used in the form of a powder, but each is added to the monomer composition in the form of an "aqueous dispersion of hydrophobic particles". In other words, the hydrophobic particles are introduced into the monomer composition in the form of a colloidal solution in which each hydrophobic particle is stably dispersed without being precipitated or agglomerated. This is because, when the polymerization process is performed by introducing the hydrophobic particles into the monomer composition in the form of a powder, the hydrophobic particles are precipitated without being dispersed in the monomer composition in the form of an aqueous solution, so that the generated bubbles cannot be effectively stabilized.

In addition, the hydrophobic particles may be stably dispersed in the aqueous dispersion without agglomeration between particles by a dispersion stabilizer such as a surfactant, which will be described later. Specifically, the dispersion stabilizer may form an electric double layer on the surface of hydrophobic particles to induce an electrostatic repulsive force between particles, which may stabilize the hydrophobic particles, or the surfactant may be adsorbed on the surface of hydrophobic particles to induce a steric repulsive force between particles, which may prevent the particles from agglomerating with each other. On the other hand, when a dispersion stabilizer is not included in the aqueous dispersion of hydrophobic particles, a phenomenon in which the hydrophobic particles agglomerate with each other or sink due to gravity is caused, so that dispersion of the hydrophobic particles cannot be stabilized. Accordingly, when an aqueous dispersion of hydrophobic particles that does not contain a dispersion stabilizer is used together with a foaming agent in the polymerization step, it is impossible to effectively capture bubbles and thus pores cannot be formed in the super absorbent polymer, so it is difficult to improve the absorption rate of the super absorbent polymer.

Meanwhile, each parameter indicating the shape of the super absorbent polymer particles according to an embodiment will be described as follows.

First, the aspect ratio is a parameter for determining whether a particle has regular symmetry, means the ratio of the shortest diameter of the particle to the longest diameter of the same particle, and can be calculated as 'the shortest diameter of particle/the longest diameter of particle'. In this case, the longest diameter of the particle means a major axis passing through the center of the particle, and the shortest diameter of the particle means a minor axis passing through the center of the particle which is orthogonal to the major axis.

Therefore, as the aspect ratio is closer to 1, the particles can be considered to have regular symmetry such as a sphere or a cube, and as the aspect ratio deviates from 1, the particles can be considered to have different dimensions along different axis such as a needle shape or an ellipse.

At this time, an average value of the aspect ratio is measured after being scattered on a stage in an arbitrary method by a vacuum in the measuring device, and obtained as a statistical result by securing a sample number (n) of 200 or more and averaging them.

In addition, the convexity is a parameter for measuring an outline and surface roughness of a particle, and is calculated by the following Equation 1:

[Equation 1]

Convexity = convex hull perimeter/actual particle perimeter

in Equation 1,

the convex hull perimeter is a length of an elastic band when it is assumed that an image obtained by capturing a 3D image of a 3D particle to be measured as a 2D image is surrounded by an imaginary elastic band extending around the outline, and
the actual particle perimeter is an actual perimeter of an image obtained by capturing a 3D image of a 3D particle to be measured as a 2D image.

Accordingly, the convexity has a value of 0 to 1. As the convexity is closer to 1, the particle can be considered to have a very smooth outline, and as the convexity is closer to 0, the particle can be considered to have a rough or uneven outline.

At this time, an average value of convexity is also measured after being scattered on a stage in an arbitrary method by a vacuum in the measuring device in the same manner as in the average value of the aspect ratio, and obtained as a statistical result by securing a sample number (n) of 200 or more and averaging them.

These parameters can be measured using various commercial instruments that quantify and analyze the morphologi of particles based on image analysis of the particles. As an example, the parameters may be measured with morphologi 4 manufactured by Malvern Panalytical, and specifically by the following 4 steps, which will be described in more detail in the following experimental examples.

1) Sample preparation: A sample is prepared by classifying super absorbent polymer particles having a particle diameter of 300 $\mu$m to 600 $\mu$m at 1.0 amplitude for 1 minute using a classifier from Retsch. At this time, the particle diameter of the super absorbent polymer may be measured in accordance with the EDANA (European Disposables and Nonwovens Association) WSP 220.3.

2) Image capture: The prepared sample is set on a stage in the instrument, and scanned at 2.5 magnification to capture images of individual particles.

3) Image processing: For the captured images, parameter values such as the image captured as a 2D image of a 3D image of the 3D particle, CE diameter (Circle Equivalent diameter), shortest diameter, longest diameter, actual particle perimeter and convex hull perimeter are measured for each particle.

4) A distribution of each parameter for all particles included in the sample is derived based on the analyzed data for each particle.

Hereinafter, the super absorbent polymer and the method for preparing a super absorbent polymer according to specific embodiments of the present disclosure will be described in more detail.

**Super absorbent polymer**

The super absorbent polymer according to one embodiment includes a powder-type base resin including a cross-linked polymer of an acrylic acid-based monomer having at least partially neutralized acidic groups and an internal cross-linking agent; and a surface cross-linked layer formed by further cross-linking the cross-linked polymer using a surface cross-linking agent on the base resin.

The above-described super absorbent polymer has an average value of an aspect ratio (A/R) of particles of 0.75 or more, and an average value of convexity calculated by the Equation 1 of 0.90 or less, when measured for particles having a particle diameter of 300 $\mu$m to 600 $\mu$m. When the average value of the aspect ratio of particles having a particle diameter of 300 $\mu$m to 600 $\mu$m in the super absorbent polymer is less than 0.75, the particles do not have a spherical shape and thus the absorption rate is fast, but a balance between water retention capacity and absorbency under pressure represented by the following Equations 2 and 3 may be lowered. When the average value of convexity of particles having a particle diameter of 300 $\mu$m to 600 $\mu$m in the super absorbent polymer is greater than 0.9, the pore structure in the particles is not developed or the particles have a smooth surface, so that the absorption rate of the super absorbent polymer may be reduced. Therefore, when the particles having a particle diameter of 300 $\mu$m to 600 $\mu$m in the super absorbent polymer have an average value of an aspect ratio of 0.75 or more and simultaneously satisfy an average value of convexity of 0.90 or less, a super absorbent polymer having an excellent balance between the absorption rate and the absorption performance can be provided.

More specifically, for example, the above-described super absorbent polymer may have an average value of an aspect ratio (A/R) of particles of 0.75 or more, and 0.90 or less, 0.85 or less, or 0.80 or less, when measured for particles having a particle diameter of 300 $\mu$m to 600 $\mu$m. In addition, the above-described super absorbent polymer may have an average value of convexity of 0.7 or more, 0.8 or more, or 0.85 or more, and 0.9 or less, when measured for particles having a particle diameter of 300 $\mu$m to 600 $\mu$m.

In addition, the above-described super absorbent polymer has a vortex time (absorption rate) of 60 seconds or less at 24.0 °C. More specifically, the vortex time may be 50 seconds or less, 48 seconds or less, 46 seconds or less, or 45 seconds or less. In addition, as the lower vortex time can be evaluated as the better, the lower limit is theoretically 0 seconds, but may be 10 seconds or more, 20 seconds or more, 30 seconds or more, or 35 seconds or more. The method for measuring the vortex time of the super absorbent polymer will be described in more detail in the following experimental examples.

Meanwhile, the acrylic acid-based monomer is a compound represented by the following Chemical Formula 1:

$$[\text{Chemical Formula 1}] \qquad R^1\text{-COOM}^1$$

in Chemical Formula 1,

$R^1$ is a C2 to C5 alkyl group having an unsaturated bond, and
$M^1$ is a hydrogen atom, a monovalent or divalent metal, an ammonium group, or an organic amine salt.

Preferably, the acrylic acid-based monomer may include at least one selected from the group consisting of acrylic acid, methacrylic acid, and a monovalent metal salt, a divalent metal salt, an ammonium salt and an organic amine salt thereof.

Herein, the acrylic acid-based monomers may be those having acidic groups which are at least partially neutralized. Preferably, the acrylic acid-based monomer partially neutralized with an alkali substance such as sodium hydroxide, potassium hydroxide, ammonium hydroxide, or the like may be used. A degree of neutralization of the acrylic acid-based monomer may be 40 to 95 mol%, 40 to 80 mol%, or 45 to 75 mol%. The range of the degree of neutralization can be adjusted according to final properties. An excessively high degree of neutralization causes the neutralized monomers to be precipitated, and thus polymerization may not readily occur. On the contrary, an excessively low degree of neutralization not only deteriorates absorbency of the polymer, but also gives the polymer hard-to-handle properties, such as those of an elastic rubber.

In addition, a concentration of the acrylic acid-based monomer may be about 20 to 60 wt%, or about 40 to 50 wt% based on the monomer composition containing the raw materials of the super absorbent polymer and the solvent, and properly controlled in consideration of polymerization time and reaction conditions. When the concentration of the monomer is excessively low, the yield of the super absorbent polymer is low and there may be a problem in economic efficiency. In contrast, when the concentration is excessively high, it may cause problems in processes in that some of the monomer may be extracted or the pulverization efficiency of the polymerized hydrogel polymer may be lowered in the pulverization process, and thus physical properties of the super absorbent polymer may be deteriorated.

In addition, the terminology 'internal cross-linking agent' used herein is different from a surface cross-linking agent for cross-linking the surface of the super absorbent polymer particles to be described later, and the internal cross-linking agent polymerizes unsaturated bonds of the water-soluble ethylene-based unsaturated monomers by cross-linking. The cross-linking in the above step proceeds both on the surface and on the inside, but when the surface cross-linking process of the super absorbent polymer particles to be described later is in progress, the surface of the particles of the finally prepared super absorbent polymer has a structure cross-linked by a surface cross-linking agent, and the inside of the particles has a structure cross-linked by the internal cross-linking agent.

As the internal cross-linking agent, any compound may be used as long as it allows the introduction of cross-linking bonds during polymerization of the acrylic acid-based monomer. Specifically, the internal cross-linking agent may be a cross-linking agent having one or more ethylene-based unsaturated groups in addition to the functional group which may react with the water-soluble substituents of the acrylic acid-based monomer; or a cross-linking agent having two or more functional groups which may react with the water-soluble substituents of the monomer and/or the water-soluble substituents formed by hydrolysis of the monomer.

For example, as the internal cross-linking agent, a multifunctional cross-linking agent such as N,N'-methylenebisacrylamide, trimethylpropane tri(meth)acrylate, ethylene glycol di(meth)acrylate, polyethylene glycol (meth)acrylate, polyethylene glycol di(meth)acrylate, propylene glycol di(meth)acrylate, polypropylene glycol (meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triarylamine, ethylene glycol diglycidyl ether, propylene glycol, glycerin, or ethylene carbonate may be used alone or in combination of two or more. However, the present disclosure is not limited thereto.

Preferably, the internal cross-linking agent may be a polyalkylene glycol (meth)acrylate-based compound such as polyethylene glycol (meth)acrylate, polyethylene glycol di(meth)acrylate, propylene glycol di(meth)acrylate, or polypropylene glycol (meth)acrylate. Using the above-described internal cross-linking agent is preferable, because foaming by the carbonate-based foaming agent, which will be described later, can be easily achieved.

The cross-linking polymerization of the water-soluble ethylene-based unsaturated monomer in the presence of the internal cross-linking agent may be performed by thermal polymerization, photopolymerization or hybrid polymerization in the presence of a polymerization initiator with or without a thickener, a plasticizer, a preservation stabilizer, an antioxidant, etc., but the specific details will be described later.

In addition, the super absorbent polymer further includes a surface cross-linked layer formed by further cross-linking the cross-linked polymer included in the base resin using a surface cross-linking agent on at least a part of the surface of the base resin. This is to increase the surface cross-linking density of the super absorbent polymer. When the super absorbent polymer further includes a surface cross-linked layer as described above, it has a structure having a higher cross-linking density on the outside than on the inside.

As the surface cross-linking agent, any surface cross-linking agent that has been conventionally used in the preparation of super absorbent polymers may be used without particular limitation. For example, the surface cross-linking agent may include at least one selected from the group consisting of a polyalcohol-based compound, a polyepoxy-based compound, a polyamine compound, a haloepoxy compound, a condensation product of a haloepoxy compound, an oxazoline-based compound, and an alkylene carbonate-based compound.

Specifically, as the polyalcohol-based compound, mono-, di-, tri-, tetra- or polyethylene glycol, monopropylene glycol, 1,3-propanediol, dipropylene glycol, 2,3,4-trimethyl-1,3-pentanediol, polypropylene glycol, glycerol, polyglycerol, 2-butene-1,4-diol, 1,4-butanediol, 1,3-butanediol, 1,5-pentanediol, 1,6-hexanediol, 1,2-cyclohexane dimethanol, or the like may be used.

In addition, as the polyepoxy-based compound, ethylene glycol diglycidyl ether, glycidol, or the like may be used.

As the polyamine compound, ethylene diamine, diethylene triamine, triethylene tetraamine, tetraethylene pentamine, pentaethylene hexamine, polyethylene imine, polyamide polyamine, or the like may be used.

Further, as the haloepoxy compound, epichlorohydrin, epibromohydrin, $\alpha$-methylepichlorohydrin, or the like may be used.

In addition, as the oxazoline-based compound, mono-, di-, or polyoxazolidinone may be used.

In addition, as the alkylene carbonate compound, ethylene carbonate, propylene carbonate, glycerol carbonate, or the like may be used.

More specifically, the surface cross-linking agents described above may be used alone or in combination with each other. For example, an alkylene carbonate compound such as ethylene carbonate may be used as the surface cross-linking agent.

In addition, the super absorbent polymer may include hydrophobic particles. Herein, the hydrophobic particles refer to water-insoluble particles having a water contact angle of 50° or more or not soluble in water. Particles having a water contact angle of less than 50° and water-soluble particles may be dissolved in the monomer composition in the form of an aqueous solution, and thus it is difficult to capture bubbles generated in the polymerization process. On the other hand, the hydrophobic particles are located at the interface between the bubbles hydrophobic in the neutralizing solution such as carbon dioxide and the neutralizing solution, so that the bubbles can be effectively captured and then stabilized.

Accordingly, the hydrophobic particles have a water contact angle of 50° or more. More specifically, the hydrophobic particles may have a water contact angle of 70° or more, 100° or more, 120° or more, or 150° or more, and 175° or less.

In this case, the contact angle of the hydrophobic particles may be measured in the following manner. First, a coating solution in which hydrophobic particles are dispersed in a methylene chloride solvent at a concentration of 5 wt% is prepared. Next, the coating solution was spin-coated on a wafer without surface roughness, and dried at room temperature to remove the remaining solvent. Then, a contact angle is measured by dropping water dropwise on the coated layer, and defined as the contact angle of each hydrophobic particle.

In addition, the hydrophobic particles have an average particle diameter of 0.2 $\mu$m to 50 $\mu$m. When the average particle diameter of the hydrophobic particles is less than 0.2 $\mu$m, it is difficult to effectively capture the bubbles generated during the manufacturing process, so there is a problem in that uniform pores are not formed. When the average particle diameter of the hydrophobic particles is more than 50 $\mu$m, it may be difficult to improve the absorption rate of the super absorbent polymer, because the pore size to be formed is excessively large. Specifically, for example, the hydrophobic particles may have an average particle diameter ($\mu$m) of 0.5 or more, 1 or more, 2 or more, or 4 or more, and 40 or less, 35 or less, or 30 or less.

Herein, the average particle diameter of the hydrophobic particles means D50, and the "particle diameter Dn" means a particle diameter at the n% point of the cumulative distribution of the number of particles according to particle diameters. In other words, D50 is a particle diameter at the 50% point of the cumulative distribution of the number of particles according to particle diameters, D90 is a particle diameter at the 90% point of the cumulative distribution of the number of particles according to particle diameters, and D10 is a particle diameter at the 10% point of the cumulative distribution of the number of particles according to particle diameters. The Dn may be measured using a laser diffraction method. Specifically, the powder to be measured is dispersed in the dispersion medium and introduced into a commercially available particle size measuring device (e.g., Microtrac S3500). Then, a particle size distribution is obtained by measuring a difference in diffraction patterns according to particle diameters when the particles pass through the laser beam. In the measuring device, D10, D50 and D90 can be obtained by calculating a particle diameter at a point of reaching 10%, 50% and 90% of the cumulative distribution of the number of particles according to particle diameters.

The hydrophobic particles may be at least one selected from the group consisting of hydrophobic silica, a metal salt of a C7 to C24 fatty acid, and hydrophobic organic particles.

Herein, the hydrophobic silica is a generic term for silica having a water contact angle of 50° or more due to a small content of silanol (-SiOH) on its surface, and hydrophobic silica known in the art may be used without limitation.

In addition, the metal salt of a C7 to C24 fatty acid refers to a compound in which a metal cation is bonded instead of a hydrogen ion of a carboxyl group at the end of an unsaturated or saturated fatty acid having a linear structure while having 7 to 24 carbon atoms in the molecule, and may be a monovalent metal salt, or a polyvalent metal salt of divalent or higher. At this time, when the hydrophobic particles are a metal salt of a fatty acid having less than 7 carbon atoms, it is not possible to capture the bubbles generated in the form of particles by ionization in an aqueous solution. When the hydrophobic particles are a metal salt of a fatty acid having more than 24 carbon atoms, the chain of the fatty acid becomes long, which may cause difficult dispersion.

Specifically, when the metal salt of the fatty acid is a monovalent metal salt, it has a structure in which one fatty acid carboxylate anion is bonded to an alkali ion, which is a monovalent metal cation. In addition, when the metal salt of the fatty acid is a polyvalent metal salt of divalent or higher, it has a structure in which as many as fatty acid carboxylate anions as the number of the valence of the metal cation are bonded to the metal cation.

In one embodiment, the hydrophobic particles may be a metal salt of a C12 to C20 saturated fatty acid. For example, the hydrophobic particles may be at least one metal salt of a saturated fatty acid selected from the group consisting of a metal salt of lauric acid containing 12 carbon atoms in the molecule; a metal salt of tridecyl acid containing 13 carbon atoms in the molecule; a metal salt of myristic acid containing 14 carbon atoms in the molecule; a metal salt of pentadecanoic acid containing 15 carbon atoms in the molecule; a metal salt of palmitic acid containing 16 carbon atoms in the molecule; a metal salt of margaric acid containing 17 carbon atoms in the molecule; a metal salt of stearic acid containing 18 carbon atoms in the molecule; a metal salt of nonadecylic acid containing 19 carbon atoms in the molecule; and a metal salt of arachidic acid containing 20 carbon atoms in the molecule.

Preferably, the metal salt of a fatty acid may be a metal salt of stearic acid. For example, it may be at least one metal salt of stearic acid selected from the group consisting of calcium stearate, magnesium stearate, sodium stearate, zinc stearate and potassium stearate.

In addition, the hydrophobic organic particles may be at least one selected from the group consisting of an ethylene polymer, a propylene polymer, a styrene polymer, a butadiene polymer, a styrene-butadiene copolymer, an alkyl acrylate polymer, an alkyl methacrylate polymer, an alkyl acrylate-acrylonitrile copolymer, an acrylonitrile-butadiene copolymer, an acrylonitrile-butadiene-styrene copolymer, an acrylonitrile-alkyl acrylate-styrene copolymer, an alkyl methacrylate-butadiene-styrene copolymer, and an alkyl acrylate-alkyl methacrylate copolymer.

In addition, the super absorbent polymer may have a plurality of pores, and an average diameter of the plurality of pores may be 10 $\mu$m to 400 $\mu$m. When the average diameter of the pores of the super absorbent polymer is too small or too large, the specific surface area of the super absorbent polymer is not sufficient, so that it is difficult to expect an improvement in the absorption rate. In this case, the pore structure included in the super absorbent polymer may vary depending on the type of hydrophobic particles dispersed in water serving to capture the gas foamed by the foaming agent, as will be described later.

Specifically, when the super absorbent polymer includes a metal salt of stearic acid such as calcium stearate, magnesium stearate, sodium stearate and potassium stearate as the hydrophobic particles, the average diameter of the plurality of pores included in the super absorbent polymer may be 60 $\mu$m to 200 $\mu$m.

Also, when the super absorbent polymer includes hydrophobic silica as the hydrophobic particles, the average diameter of the plurality of pores included in the super absorbent polymer may be 100 $\mu$m to 400 $\mu$m.

The average diameter of the pores can be achieved by preparing the super absorbent polymer using the aqueous dispersion of hydrophobic particles, so that pores having a uniform diameter, for example, 10 $\mu$m to 400 $\mu$m, 50 $\mu$m to 300 $\mu$m, or 150 $\mu$m to 220 $\mu$m, are evenly formed on the surface of the super absorbent polymer.

On the other hand, when the super absorbent polymer does not use these hydrophobic particles, uses a surfactant conventionally used as a foam stabilizer, or uses hydrophobic silica in the form of powder, non-uniform pores larger than the above-mentioned range are formed, which is not preferable.

In this case, the average diameter of the pores in the super absorbent polymer can be confirmed by observing the internal structure of the super absorbent polymer particle to be measured with an electron microscope (SEM; magnification: X50 or X200). More specifically, after measuring the longest diameter of each particle included in the super absorbent polymer particles, a median of the measured longest diameters of the particles may be obtained as the average diameter. Herein, it is preferable to obtain the average diameter after measuring the diameter of 300 or more pores for one super absorbent polymer sample.

In addition, the super absorbent polymer may have centrifuge retention capacity (CRC) measured according to the EDANA WSP 241.3 of 27 g/g or more, and absorbency under pressure (AUP) at 0.7 psi measured according to the EDANA WSP 242.3 of 23.5 g/g or more.

More specifically, the super absorbent polymer may have centrifuge retention capacity (CRC) measured according to the EDANA WSP 241.3 of 27 g/g or more, or 27.5 g/g or more, and 34 g/g or less, or 33 g/g or less.

In addition, the super absorbent polymer may have absorbency under pressure (AUP) at 0.7 psi measured according to the EDANA WSP 242.3 of 23.5 g/g or more, or 24 g/g or more, and 28 g/g or less, or 27 g/g or less.

Meanwhile, the super absorbent polymer may include particles having a particle diameter of about 150 to about 850 $\mu$m in an amount of 90 wt% or more based on the total weight, and the particle diameter may be measured in accordance with the EDANA (European Disposables and Nonwovens Association) WSP 220.3.

**Method for preparing super absorbent polymer**

Meanwhile, the super absorbent polymer may be prepared by a method including the steps of: preparing a monomer composition containing an acrylic acid-based monomer having at least partially neutralized acidic groups, and an internal cross-linking agent, (step 1); preparing a hydrogel polymer by cross-linking polymerization of the monomer composition in the presence of a first aqueous dispersion of hydrophobic particles, a second aqueous dispersion of hydrophobic particles, and a foaming agent or a bubble generator (step 2); forming a powder-type base resin by drying and pulverizing the hydrogel polymer (step 3); and forming a surface cross-linked layer by further cross-linking the surface of the base resin in the presence of a surface cross-linking agent (step 4), wherein the aqueous dispersion of hydrophobic particles is a colloidal solution in which hydrophobic particles having an average particle diameter of 0.2 μm to 50 μm are dispersed, and the super absorbent polymer to be prepared satisfies the above-described aspect ratio, convexity, and absorption rate. For details on other description of the hydrophobic particles, refer to the above.

Hereinafter, each step of the method for preparing a super absorbent polymer according to one embodiment will be described in more detail.

**(Step 1)**

In the preparation method of an embodiment, the step 1 is to prepare a monomer composition containing an acrylic acid-based monomer having at least partially neutralized acidic groups, and an internal cross-linking agent. For details on the acrylic acid-based monomer and the internal cross-linking agent, refer to the above.

In the monomer composition, the internal cross-linking agent may be used in an amount of 0.01 to 5 parts by weight based on 100 parts by weight of the water-soluble ethylene-based unsaturated monomer. For example, the internal cross-linking agent may be used in an amount of 0.01 parts by weight or more, 0.05 parts by weight or more, 0.1 parts by weight or more, or 0.45 parts by weight or more, and 5 parts by weight or less, 3 parts by weight or less, 2 parts by weight or less, 1 part by weight or less, or 0.7 parts by weight or less based on 100 parts by weight of the water-soluble ethylene-based unsaturated monomer. When too little internal cross-linking agent is used, cross-linking does not occur sufficiently, and thus it may be difficult to achieve strength above an appropriate level, and when too much internal cross-linking agent is used, the internal cross-linking density increases, and thus it may be difficult to achieve a desired level of water retention capacity.

In addition, the monomer composition may further include a polymerization initiator for initiating a polymerization reaction of the monomer. The polymerization initiator is not particularly limited as long as it is generally used in the preparation of super absorbent polymers.

Specifically, the polymerization initiator may be an initiator for thermal polymerization or an initiator for photopolymerization by UV radiation according to the polymerization method. However, even when the photopolymerization method is applied thereto, a certain amount heat is generated by UV radiation and the like, and some heat occurs as the polymerization reaction, an exothermal reaction, progresses. Therefore, the composition may additionally include the thermal polymerization initiator.

More specifically, any compound which can form a radical by light such as UV rays may be used as the photopolymerization initiator without limitation.

For example, the photopolymerization initiator may be one or more compounds selected from the group consisting of benzoin ether, dialkyl acetophenone, hydroxyl alkylketone, phenyl glyoxylate, benzyl dimethyl ketal, acyl phosphine, and α-aminoketone. Further, as the specific example of acyl phosphine, commercial lucirin TPO, namely, diphenyl(2,4,6-trimethylbenzoyl)phosphine oxide, may be used. More various photopolymerization initiators are well disclosed in "UV Coatings: Basics, Recent Developments and New Application (Elsevier, 2007)" written by Reinhold Schwalm, p 115, and the present disclosure is not limited thereto.

The photopolymerization initiator may be used at a concentration of about 0.01 to about 1.0 wt% based on the monomer composition. When the concentration of the photopolymerization initiator is excessively low, the polymerization rate may become slow, and when the concentration is excessively high, the molecular weight of the super absorbent polymer may become low and properties may be uneven.

Furthermore, as the thermal polymerization initiator, one or more initiators selected from the group consisting of a persulfate-based initiator, an azo-based initiator, hydrogen peroxide, and ascorbic acid may be used. Specifically, sodium persulfate ($Na_2S_2O_8$), potassium persulfate ($K_2S_2O_8$), ammonium persulfate (($NH_4$)$_2S_2O_8$), and the like may be used as examples of the persulfate-based initiators; and 2,2-azobis-(2-amidinopropane)dihydrochloride, 2,2-azobis-(N,N-dimethylene)isobutyramidinedihydrochloride, 2-(carbamoylazo)isobutylonitril, 2,2-azobis-[2-(2-imidazolin-2-yl)propane]dihydrochloride, 4,4-azobis-(4-cyanovaleric acid), and the like may be used as examples of azo-based initiators. More various thermal polymerization initiators are well disclosed in "Principle of Polymerization (Wiley, 1981)" written by Odian, p 203, and the present disclosure is not limited thereto.

The thermal polymerization initiator may be used at a concentration of about 0.001 to about 0.5 wt% based on the monomer composition. When the concentration of the thermal polymerization initiator is excessively low, additional thermal polymerization hardly occurs and there may be less effect of adding the thermal polymerization initiator. When the concentration of the thermal polymerization initiator is excessively high, the molecular weight of the super absorbent polymer may become low and the properties may be uneven.

The polymerization initiator may be used in an amount of 2 parts by weight or less based on 100 parts by weight of the water-soluble ethylene-based unsaturated monomer. When the concentration of the polymerization initiator is excessively low, the polymerization rate may become slow, and a large amount of residual monomers may be extracted from the final product. Conversely, when the concentration of the polymerization initiator is higher than the above range, polymer chains forming a network are shortened, so that the content of extractable components increases and absorbency under pressure decreases, thereby lowering physical properties of the polymer.

The monomer composition may further include an additive such as a thickener, a plasticizer, a preservation stabilizer, and an antioxidant, if necessary.

In addition, the monomer composition containing the monomer may be, for example, in the form of a solution dissolved in a solvent such as water. The solid content of the monomer composition in a solution state, that is, the concentration of the monomer, the internal cross-linking agent, and the polymerization initiator may be appropriately adjusted in consideration of the polymerization time and reaction conditions. For example, the solid content of the monomer composition may be 10 to 80 wt%, 15 to 60 wt%, or 30 to 50 wt%.

When the monomer composition has the solid content in the above range, it may be advantageous for controlling the pulverization efficiency during pulverization of the polymer to be described later while eliminating the need to remove unreacted monomers after polymerization by using a gel effect phenomenon occurring in the polymerization reaction of a high-concentration aqueous solution.

At this time, any solvent which can dissolve the above components may be used without limitation. For example, the solvent may be at least one selected from water, ethanol, ethyleneglycol, diethyleneglycol, triethyleneglycol, 1,4-butanediol, propyleneglycol, ethyleneglycol monobutylether, propyleneglycol monomethylether, propyleneglycol monomethylether acetate, methylethylketone, acetone, methylamylketone, cyclohexanone, cyclopentanone, diethyleneglycol monomethylether, diethyleneglycol ethylether, toluene, xylene, butyrolactone, carbitol, methylcellosolve acetate, and N,N-dimethylacetamide.

**(Step 2)**

Subsequently, a step of preparing a hydrogel polymer by cross-linking polymerization of the monomer composition in the presence of an aqueous dispersion of hydrophobic particles and a carbonate-based foaming agent is performed. In the above step, carbon dioxide bubbles are generated from the carbonate-based foaming agent, and the hydrophobic particles dispersed in water effectively capture these bubbles, thereby increasing the specific surface area of the prepared hydrogel polymer.

In addition, the hydrophobic particles may be included in the aqueous dispersion in an amount of 10 to 70 wt% based on a total weight of the aqueous dispersion. When the content of the hydrophobic particles in the hydrophobic aqueous dispersion is excessively low, the attraction force between the particles is lowered, so that dispersion stability is improved, but there is a problem in that a large amount must be added due to the low concentration in the preparation of the super absorbent polymer. When the content of the hydrophobic particles in the hydrophobic aqueous dispersion is excessively high, dispersion stability may be deteriorated due to agglomeration between particles.

Meanwhile, the hydrophobic particles may be uniformly dispersed in the aqueous dispersion by a dispersion stabilizer surrounding the particle surface such as a surfactant or a polymer, respectively. The surfactant may form an electric double layer on the surface of hydrophobic particles to induce an electrostatic repulsive force between particles, which may stabilize the hydrophobic particles to improve dispersion stability of the hydrophobic particles. In addition, the polymer may be adsorbed on the surface of hydrophobic particles to induce a steric repulsive force between particles, which may prevent the particles from agglomerating with each other to improve dispersion stability of the hydrophobic particles.

For example, one or more surfactants selected from the group consisting of cationic surfactants, anionic surfactants, amphoteric surfactants and nonionic surfactants may be used as the surfactant. Preferably, two or more surfactants may be used for stabilization of dispersion of the hydrophobic particles. More specifically, when the above-described metal salt of a fatty acid is included as the hydrophobic particles, in consideration of its form, etc., a nonionic surfactant and an anionic surfactant may be used together in order to more effectively and stably disperse the hydrophobic particles in water. For example, a nonionic surfactant to which a long-chain hydrocarbon having 10 or more carbon atoms is bonded and a sulfate-based or phosphate-based anionic surfactant may be used together.

For example, examples of the cationic surfactant include dialkyldimethylammonium salt and alkylbenzylmethylammonium salt, examples of the anionic surfactant include alkylpolyoxyethylene sulfate such as sodium sulfate of fatty acid alcohol polyethenoxy ether, monoalkyl sulfate, alkylbenzenesulfonate, monoalkyl phosphate such as sodium pyrophosphate or sodium phosphate trimer, and a sulfate having a functional group containing a long-chain hydrocarbon or a sodium salt thereof such as sodium lauryl ether sulfate, ammonium lauryl sulfate, sodium dodecyl sulfate, sodium myreth sulfate or sodium laureth sulfate, examples of the amphoteric surfactant include alkylsulfobetaine and alkylcarboxybetaine, and examples of the nonionic surfactant include a styrene-maleic anhydride copolymer, a polyoxyethylene-polyoxypropylene copolymer, polyoxyethylene-fatty acid ether such as stearyl polyethenoxy ether, polyoxyethylene alkyl ether such as polyethylene glycol or polyoxyethylene lauryl ether, polyoxyalkylene alkylphenyl ether, polyoxyethylene arylphenyl ether, fatty acid ester such as polysorbate, fatty acid sorbitan ester, polyglycerol monolaurate, polyethylene glycol laurate or glycerin monostearate, alkyl monoglyceryl ether, alkanolamide, and alkyl polyglycoside. However, the present disclosure is not limited thereto.

In addition, as the polymer used as the dispersion stabilizer, polyalkylene glycol, polyethyleneimide, polyvinyl alcohol, polyacrylamide, or polyvinylpyrrolidone may be used.

Meanwhile, the hydrophobic particles are used in an amount of 0.001 to 5 parts by weight based on 100 parts by weight of the acrylic acid-based monomer. When the content of the aqueous dispersion of hydrophobic particles is too low, it may not be possible to efficiently capture the generated bubbles, and when the content of the aqueous dispersion of hydrophobic particles is too high, too many bubbles are captured, thereby lowering the bulk density. Specifically, the hydrophobic particles are used in an amount of 0.01 parts by weight or more, 0.05 parts by weight or more, or 0.07 parts by weight or more, and 3 parts by weight or less, 2 parts by weight or less, 1 part by weight or less, or 0.5 parts by weight based on 100 parts by weight of the acrylic acid-based monomer.

In addition, the foaming agent may be a carbonate-based foaming agent. The carbonate-based foaming agent serves to increase the surface area by foaming during polymerization to form pores in the hydrogel polymer. For example, it may be at least one selected from the group consisting of sodium bicarbonate (sodium hydrogen carbonate), sodium carbonate, potassium bicarbonate, potassium carbonate, calcium bicarbonate, calcium bicarbonate, magnesium bicarbonate and magnesium carbonate.

The carbonate-based foaming agent may be used in an amount of 0.005 to 1 part by weight based on 100 parts by weight of the acrylic acid-based monomer. When the content of the foaming agent is less than 0.005 parts by weight, the effect of using the foaming agent may be insignificant. When the content of the foaming agent exceeds 1 part by weight, there are too many pores in the cross-linked polymer, so that the gel strength of the super absorbent polymer to be prepared decreases and the density decreases, which may cause problems in distribution and storage. For example, the carbonate-based foaming agent may be used in an amount of 0.01 parts by weight or more, or 0.05 parts by weight or more, and 0.5 parts by weight or less, 0.3 parts by weight or less, or 0.2 parts by weight or less based on 100 parts by weight of the acrylic acid-based monomer.

In addition, the carbonate-based foaming agent and the aqueous dispersion of hydrophobic particles may be used in a weight ratio of 1:0.1 to 1:4. When the aqueous dispersion of hydrophobic particles are used in an excessively low content compared to the carbonate-based foaming agent, it is difficult to effectively capture the generated bubbles. When the hydrophobic particles are used in an excessively high content compared to the foaming agent, various physical properties such as water retention capacity and absorption rate may decrease. Specifically, the carbonate-based foaming agent and the hydrophobic particles may be used in a weight ratio of 1:0.4 or more, 1:0.6 or more, or 1:0.8 or more, and 1:1.7 or less, 1:1.5 or less, or 1:1.2 or less. For example, the carbonate-based foaming agent and the hydrophobic particles may be used in a weight ratio of 1:1.

In addition, surfactants such as alkyl sulfate-based compounds and polyoxyethylene alkyl ether-based compounds commonly used as a bubble stabilizer may not be used in the steps 1 and 2. For example, in the steps 1 and 2, anionic surfactants such as alkyl sulfate-based compounds, e.g., sodium dodecyl sulfate, ammonium lauryl sulfate, sodium lauryl ether sulfate, or sodium myreth sulfate; or nonionic surfactants such as alkyl ether sulfate-based compounds, e.g., polyoxyethylene lauryl ether may not be used. Accordingly, the problem of lowering the surface tension of the super absorbent polymer caused by the use of the surfactant can be prevented.

Meanwhile, the polymerization of the monomer composition in the presence of such an aqueous dispersion of hydrophobic particles and a carbonate-based foaming agent is not particularly limited as long as it is a commonly used polymerization method.

Specifically, the polymerization method is largely divided into the thermal polymerization and the photopolymerization according to an energy source of the polymerization. In the case of thermal polymerization, it is generally carried out in a reactor equipped with an agitation spindle, such as a kneader. In the case of photopolymerization, it may be carried out in a reactor equipped with a movable conveyor belt. However, the polymerization method is just an example, and the present disclosure is not limited thereto.

For example, in the reactor equipped with an agitation spindle such as a kneader, the hydrogel polymer obtained by thermal polymerization by supplying hot air or heating the reactor may be discharged to a reactor outlet in the form of several centimeters to several millimeters depending on a shape of the agitation spindle provided in the reactor. Specifically, a size of the hydrogel polymer obtained may vary depending on the concentration and injection rate of the monomer composition to be injected, and a hydrogel polymer having a weight average particle diameter of 2 to 50 mm may be usually obtained.

In addition, when photopolymerization is performed in the reactor equipped with a movable conveyor belt as described above, a hydrogel polymer in the form of a sheet having a belt width may usually be obtained. At this time, a thickness of the polymer sheet may vary depending on the concentration and injection rate of the monomer composition to be injected, and it is preferable to supply the monomer composition so that the polymer in the form of a sheet has a thickness of about 0.5 to about 5 cm. When the monomer composition is supplied to such an extent that the thickness of the polymer sheet is too thin, the production efficiency may be low. When the thickness of the polymer sheet exceeds 5 cm, the polymerization reaction may not occur evenly over the entire thickness due to the excessively thick thickness.

Generally, the moisture content of the hydrogel polymer obtained by the above method may be about 40 to about 80 wt%. At this time, "moisture content" in the present disclosure is the content of moisture in the entire weight of the polymer, and it means a value of which the weight of the dried polymer is subtracted from the weight of the polymer. Specifically, the moisture content is defined as a value calculated by measuring the weight loss due to moisture evaporation from the polymer in the process of increasing the temperature of the polymer for drying through infrared heating. At this time, the drying condition for measuring the moisture content is as follows: the temperature is increased to about 180 °C and maintained at 180 °C, and the total drying time is 20 minutes including 5 minutes of a heating step.

**(Step 3)**

Subsequently, a step of drying and pulverizing the hydrogel polymer to form a powdery base resin is performed. If necessary, a coarse pulverization step may be further performed before drying to increase the efficiency of the drying step.

Herein, the pulverizing machine used is not particularly limited. Specifically, it may include at least one selected from the group consisting of a vertical pulverizer, a turbo cutter, a turbo grinder, a rotary cutter mill, a cutter mill, a disc mill, a shred crusher, a crusher, a chopper, and a disc cutter, but it is not limited thereto.

Gel pulverization of the hydrogel polymer may be performed such that the particle diameter of the hydrogel polymer is 0.01 mm to 50 mm, or 0.01 mm to 30 mm. That is, in order to increase drying efficiency, the hydrogel polymer is preferably pulverized into particles of 50 mm or less. However, since excessive pulverization may cause agglomeration between particles, it is preferable that the hydrogel polymer is gel pulverized into particles of 0.01 mm or more.

The drying is performed on the pulverized polymer as described above or on the polymer immediately after polymerization without the pulverization step. The drying temperature in the drying step may be about 150 to about 250 °C. When the drying temperature is less than 150 °C, the drying time may become excessively long and physical properties of the super absorbent polymer to be finally formed may decrease. When the drying temperature is more than 250 °C, only the surface of the polymer is excessively dried, fine powder may be generated in the subsequent pulverization process, and physical properties of the final super absorbent polymer may decrease. Therefore, the drying may preferably be performed at a temperature of about 150 to about 200 °C, more preferably at a temperature of about 160 to about 180 °C.

Meanwhile, the drying time may be about 20 minutes to about 90 minutes in consideration of process efficiency, but is not limited thereto.

The drying method in the drying step is not particularly limited if it has been generally used in the drying process of the hydrogel polymer. Specifically, the drying step may be performed by the method of hot air provision, infrared radiation, microwave radiation, UV ray radiation, and the like. After the drying step, the moisture content of the polymer may be about 5 to about 10 wt%.

Subsequently, a step of pulverizing the dried polymer obtained through the drying step is performed.

The base resin, which is a polymer powder obtained after the pulverization step, may have a particle diameter of about 150 to about 850 μm. As the pulverizing machine used for pulverization to such a particle diameter, a pin mill, a hammer mill, a screw mill, a roll mill, a disc mill, a jog mill, or the like may be used, but the present disclosure is not limited thereto.

In order to manage the physical properties of the super absorbent polymer powder to be commercialized after the pulverization step, the base resin obtained after pulverization is classified according to particle size. Preferably, the polymer having a particle diameter of about 150 to about 850 μm is classified, and only the base resin having such a particle diameter may be subjected to a surface cross-linking reaction step.

**(Step 4)**

Meanwhile, after the base resin powder is prepared through the above-described classification process, super absorbent polymer particles may be formed by surface cross-linking while heat-treating the base resin powder in the presence of a surface cross-linking agent. The surface cross-linking induces a cross-linking reaction on the surface of the base resin powder in the presence of a surface cross-linking agent, and a surface modified layer (surface cross-linked layer) may be formed on the surface of the base resin powder through the surface cross-linking.

The content of the surface cross-linking agent may be appropriately selected depending on the type of the added surface cross-linking agent or reaction conditions, and about 0.001 to about 5 parts by weight may be used based on 100 parts by weight of the base resin. When the content of the surface cross-linking agent is too low, the surface modification may not be properly performed, and physical properties of the final polymer may be deteriorated. Conversely, when an excessive amount of the surface cross-linking agent is used, basic absorbency of the polymer may be rather deteriorated due to the excessive surface cross-linking reaction, which is not preferable.

In addition, the method of mixing the surface cross-linking agent with the base resin is not particularly limited. For example, a method of adding the surface cross-linking agent and the base resin powder in a reactor for mixing, a method of spraying the surface cross-linking agent onto the base resin powder, or a method of mixing the base resin and the surface cross-linking agent while continuously providing them to a continuously operating mixer may be used.

When adding the surface cross-linking agent, water may be mixed together and added in the form of a surface cross-linking solution. When water is added thereto, there is an advantage that the surface cross-linking agent may be evenly dispersed in the polymer. At this time, amounts of water to be added may be properly controlled for the purposes of inducing a uniform dispersion of the surface cross-linking agent, preventing an agglomeration phenomenon of the polymer powder, and optimizing a surface penetration depth of the surface cross-linking agent. For example, water may preferably be added in an amount of about 1 to about 10 parts by weight based on 100 parts by weight of the base resin.

In addition, the surface cross-linking step may be performed by further using at least one selected from the group consisting of polyvalent metal salts such as aluminum salts, more specifically, sulfate, potassium salt, ammonium salt, sodium salt and hydrochloride of aluminum in addition to the surface cross-linking agent.

As the polyvalent metal salt is additionally used, permeability of the super absorbent polymer prepared by the method of the embodiment can be further improved. The polyvalent metal salt may be added to the surface cross-linking solution together with the surface cross-linking agent, and may be used in an amount of 0.01 to 4 parts by weight based on 100 parts by weight of the base resin powder.

Meanwhile, the surface cross-linking process may be performed using a surface cross-linking solution containing water and/or a hydrophilic organic solvent (e.g., an alcohol-based polar organic solvent such as methanol) as a liquid medium together with the above-described surface cross-linking agent. At this time, amounts of water and the hydrophilic organic solvent to be added based on 100 parts by weight of the base resin powder may be properly controlled for the purposes of inducing a uniform dispersion of the surface cross-linking agent, preventing an agglomeration phenomenon of the base resin powder, and optimizing a surface penetration depth of the surface cross-linking agent.

The method of adding the surface cross-linking solution to the base resin powder is not particularly limited. For example, a method of adding the surface cross-linking solution and the base resin powder in a reactor for mixing, a method of spraying the surface cross-linking solution onto the base resin powder, or a method of mixing the base resin powder and the surface cross-linking solution while continuously providing them to a continuously operating mixer may be used.

Specifically, the surface cross-linking may be performed by heating the base resin powder to which the surface cross-linking solution is added to increase its temperature from an initial temperature of 20 °C to 130 °C to a maximum temperature of 140 °C to 200 °C over 10 minutes to 30 minutes, followed by heat-treatment while maintaining the maximum temperature for 5 minutes to 60 minutes. More specifically, the surface cross-linking may be performed by heat-treatment while maintaining a maximum temperature of 140 °C to 200 °C, or 170 °C to 195 °C for 5 minutes to 60 minutes, or 10 minutes to 50 minutes.

When satisfying the surface cross-linking conditions (especially, the temperature increasing condition and the reaction condition at the maximum reaction temperature), a super absorbent polymer appropriately satisfying the physical properties of the embodiment can be more effectively prepared.

The heating means for the surface cross-linking reaction is not particularly limited. It is possible to provide a thermal media thereto or provide a heat source directly thereto. At this time, usable thermal media may be a heated fluid such as steam, hot air, hot oil, and the like, but the present invention is not limited thereto. Furthermore, the temperature of the thermal media provided thereto may be properly selected in consideration of the means of the thermal media, heating speed, and target temperature of heating. Meanwhile, an electric heater or a gas heater may be used as the heat source provided directly, but the present disclosure is not limited thereto. After the surface cross-linked layer is formed on the surface of the base resin as described above, an inorganic material may be further mixed therewith.

The inorganic material may be, for example, at least one selected from the group consisting of silica, clay, alumina, silica-alumina composite, and titania, and preferably silica.

The inorganic material may be used in an amount of 0.01 parts by weight or more, 0.05 parts by weight or more, or 0.1 parts by weight or more, and 5 parts by weight or less, 3 parts by weight or less, or 1 part by weight or less based on 100 parts by weight of the super absorbent polymer.

The super absorbent polymer obtained according to the above-described preparation method maintains excellent absorption performance such as water retention capacity and absorbency under pressure, and satisfies an improved absorption rate, etc. Accordingly, it may satisfy various physical properties of the embodiment, and may be suitably used as a sanitary product such as a diaper, in particular, an ultra-thin sanitary product with a reduced pulp content.

The present invention will be described in more detail in the following examples. However, these examples are provided for illustrative purposes only, and the content of the present invention is not limited by the following examples.

**<Preparation Examples>**

The aqueous dispersion of hydrophobic particles used in the following Examples was prepared as follows.

**Preparation Example 1: Preparation of aqueous dispersion of calcium stearate Ca-st (5)**

First, 50 g of water containing two or more surfactants (including polyoxyethylene alkyl ether-type nonionic surfactant and sulfate-type anionic surfactant) was added to a high shear mixer, and heated to 165 °C, followed by adding 50 g of calcium stearate powder. Then, it was stirred for 30 minutes at 4000 rpm under normal pressure so that the calcium stearate could be sufficiently pulverized to obtain an aqueous dispersion Ca-st (5) in which 50 wt% of calcium stearate having an average particle diameter of 5 $\mu$m was dispersed. At this time, the pH of the aqueous dispersion was 9.5. In addition, after the Ca-st (5) was prepared, its average particle diameter (D50) was measured/calculated using a laser diffraction particle size measuring device (Microtrac S3500) as the particle diameter at 50% of the cumulative distribution of the number of particles.

**Preparation Example 2: Preparation of aqueous dispersion of magnesium stearate Mg-st (5)**

First, 50 g of water containing two or more surfactants (including sulfate-type anionic surfactant and fatty acid ester-type nonionic surfactant) was added to a high shear mixer, and heated to 150 °C, followed by adding 50 g of magnesium stearate powder. Then, it was stirred for 30 minutes at 4000 rpm under normal pressure so that the magnesium stearate could be sufficiently pulverized to obtain an aqueous dispersion Mg-st (5) in which 50 wt% of magnesium stearate having an average particle diameter of 5 $\mu$m was dispersed. At this time, the pH of the aqueous dispersion was 9, and the average particle diameter of Mg-st (5) was measured/calculated in the same manner as in Preparation Example 1.

**Preparation Example 3: Preparation of aqueous dispersion of sodium stearate Na-st (5)**

First, 50 g of water containing two or more surfactants (including sulfate-type anionic surfactant and fatty acid ester-type nonionic surfactant) was added to a high shear mixer, and 50 g of sodium stearate powder was added thereto at room temperature. Then, it was stirred for 5 minutes at 2000 rpm under normal pressure so that the sodium stearate could be sufficiently pulverized to obtain an aqueous dispersion Na-st (5) in which 50 wt% of sodium stearate having an average particle diameter of 5 $\mu$m was dispersed. At this time, the pH of the aqueous dispersion was 9, and the average particle diameter of Na-st (5) was measured/calculated in the same manner as in Preparation Example 1.

**Preparation Example 4: Preparation of aqueous dispersion of potassium stearate K-st (5)**

First, 50 g of water containing two or more surfactants (including sulfate-type anionic surfactant and fatty acid ester-type nonionic surfactant) was added to a high shear mixer, heated to 100 °C, and then 20 g of potassium stearate powder was added thereto at room temperature. Then, it was stirred for 30 minutes at 4000 rpm under normal pressure so that the potassium stearate could be sufficiently pulverized to obtain an aqueous dispersion K-st (5) in which 29 wt% of potassium stearate having an average particle diameter of 5 $\mu$m was dispersed. At this time, the pH of the aqueous dispersion was 9, and the average particle diameter of K-st (5) was measured/calculated in the same manner as in Preparation Example 1.

**Preparation Example 5: Preparation of aqueous dispersion of hydrophobic silica**

First, 100 g of water was added to a high shear mixer, and hydrophobic silica having an average particle diameter of 10 $\mu$m and a water contact angle of 130° was slowly added thereto while stirring at 5000 rpm so as to be dispersed in an amount of 2 wt% based on the total weight of the final aqueous dispersion. When the silica was completely added, the mixture was stirred at a temperature of 45 °C at 8000 rpm for 30 minutes. At this time, the pH of the aqueous dispersion was 9, and the average particle diameter (D50) of the hydrophobic silica was measured/calculated in the same manner as in Preparation Example 1.

**Preparation Example 6: Preparation of aqueous dispersion of hydrophobic silica**

An aqueous dispersion of hydrophobic silica was obtained in the same manner as in Preparation Example 5, except that hydrophobic silica having an average particle diameter of 20 $\mu$m and a water contact angle of 130° was added so as to be dispersed in an amount of 2 wt% based on the total weight of the final aqueous dispersion. The average particle diameter of the hydrophobic silica was measured/calculated in the same manner as in Preparation Example 1.

**Preparation Example 7: Preparation of aqueous dispersion of hydrophobic silica**

An aqueous dispersion of hydrophobic silica was obtained in the same manner as in Preparation Example 5, except that hydrophobic silica having an average particle diameter of 30 $\mu$m and a water contact angle of 130° was added so as to be dispersed in an amount of 2 wt% based on the total weight of the final aqueous dispersion. The average particle diameter of the hydrophobic silica was measured/calculated in the same manner as in Preparation Example 1.

**<Examples>**

**Example 1**

(Step 1) In a 3L glass container equipped with a stirrer and a thermometer, 100 g of acrylic acid, 0.5 g of PEGDA 400 (polyethylene glycol diacrylate 400) as an internal cross-linking agent, and 0.01 g of diphenyl(2,4,6-trimethylbenzoyl)-phosphine oxide as a photoinitiator were added and dissolved. Then, 890 g of 22% sodium hydroxide solution was added to prepare a monomer composition.

(Step 2) The aqueous dispersion of calcium stearate Ca-st (5) prepared in Preparation Example 1 was added to the monomer composition such that 0.1 g of calcium stearate was added based on 100 g of acrylic acid, and 0.1 g of sodium bicarbonate (SBC), which is a carbonate-based foaming agent, was added thereto. Thereafter, the monomer composition was supplied at 500 to 2000 mL/min on a conveyor belt in which a belt having a width of 10 cm and a length of 2 m was rotated at 50 cm/min. And, at the same time as the supply of the monomer composition, ultraviolet rays having an intensity of 10 mW/cm$^2$ were irradiated to perform the polymerization reaction for 60 seconds, thereby obtaining a sheet-type hydrogel polymer having a moisture content of 55 wt%.

(Step 3) Subsequently, the hydrogel polymer in the form of a sheet was cut to a size of about 5 cm × 5 cm, and then pulverized in a meat chopper to obtain hydrogel particle crumbs having a size of 1 mm to 10 mm. Thereafter, the crumbs were dried in an oven capable of changing wind direction up and down. Thereafter, it was uniformly dried by flowing hot air at 180 °C or higher from the bottom to the top for 15 minutes, and then flowing from the top to the bottom for 15 minutes, and the moisture content of the dried crumbs was set to 2% or less. After drying, pulverization was performed with a pulverizing machine, followed by classification to prepare a base resin having a diameter of 150 to 850 $\mu$m.

Then, 6 parts by weight of a surface cross-linking aqueous solution containing 3 parts by weight of ethylene carbonate was sprayed to 100 parts by weight of the prepared base resin powder, and stirred at room temperature to evenly distribute the surface cross-linking solution on the base resin powder. Then, the base resin powder mixed with the surface cross-linking solution was placed in a surface cross-linking reactor, and a surface cross-linking reaction was performed.

In this surface cross-linking reactor, it was confirmed that the base resin powder was gradually heated from the initial temperature of around 80 °C, and it was operated to reach the maximum reaction temperature of 190 °C after 30 minutes. After reaching the maximum reaction temperature, the reaction was further performed for 15 minutes, and a sample of the finally prepared super absorbent polymer was taken. After the surface cross-linking process, the super absorbent polymer of Example 1 having a particle diameter of 150 $\mu$m to 850 $\mu$m was prepared by classification with a ASTM standard mesh.

**Example 2**

A super absorbent polymer was prepared in the same manner as in Example 1, except that the aqueous dispersion of magnesium stearate Mg-st (5) prepared in Preparation Example 2 was added instead of the aqueous dispersion of calcium stearate Ca-st (5) as the aqueous dispersion of hydrophobic particles in Example 1 so that 0.1 g of magnesium stearate was added based on 100 g of acrylic acid.

**Example 3**

A super absorbent polymer was prepared in the same manner as in Example 1, except that the aqueous dispersion of sodium stearate Na-st (5) prepared in Preparation Example 3 was added instead of the aqueous dispersion of calcium stearate Ca-st (5) as the aqueous dispersion of hydrophobic particles in Example 1 so that 0.1 g of sodium stearate was added based on 100 g of acrylic acid.

**Example 4**

A super absorbent polymer was prepared in the same manner as in Example 1, except that the aqueous dispersion of potassium stearate K-st (5) prepared in Preparation Example 4 was added instead of the aqueous dispersion of calcium stearate Ca-st (5) as the aqueous dispersion of hydrophobic particles in Example 1 so that 0.1 g of potassium stearate was added based on 100 g of acrylic acid.

**Example 5**

A super absorbent polymer was prepared in the same manner as in Example 1, except that the aqueous dispersion of hydrophobic silica prepared in Preparation Example 5 was added instead of the aqueous dispersion of calcium stearate Ca-st (5) as the aqueous dispersion of hydrophobic particles in Example 1 so that 0.1 g of hydrophobic silica having an average particle diameter of 10 $\mu$m was added based on 100 g of acrylic acid.

**Example 6**

A super absorbent polymer was prepared in the same manner as in Example 1, except that the aqueous dispersion of hydrophobic silica prepared in Preparation Example 6 was added instead of the aqueous dispersion of calcium stearate Ca-st (5) as the aqueous dispersion of hydrophobic particles in Example 1 so that 0.1 g of hydrophobic silica having an average particle diameter of 20 $\mu$m was added based on 100 g of acrylic acid.

**Example 7**

A super absorbent polymer was prepared in the same manner as in Example 1, except that the aqueous dispersion of hydrophobic silica prepared in Preparation Example 7 was added instead of the aqueous dispersion of calcium stearate Ca-st (5) as the aqueous dispersion of hydrophobic particles in Example 1 so that 0.1 g of hydrophobic silica having an average particle diameter of 30 $\mu$m was added based on 100 g of acrylic acid.

**Comparative Example 1**

A super absorbent polymer was prepared in the same manner as in Example 1, except that neither the aqueous dispersion of hydrophobic particles nor the carbonate-based foaming agent was used in Example 1.

**Comparative Example 2**

A super absorbent polymer was prepared in the same manner as in Example 1, except that the aqueous dispersion of hydrophobic particles was not used in Example 1.

**Comparative Example 3**

A super absorbent polymer was prepared in the same manner as in Example 1, except that 0.02 g of a 25 wt% sodium dodecyl sulfate solution (SDS, manufactured by Sigma Aldrich) was added instead of the aqueous dispersion of calcium stearate Ca-st (5) in Example 1.

**Comparative Example 4**

A super absorbent polymer was prepared in the same manner as in Example 1, except that 0.1 g of calcium stearate in the form of a powder having an average particle diameter of 5 $\mu$m was used based on 100 g of acrylic acid instead of Ca-st (5) in the form of an aqueous dispersion of hydrophobic particles in Example 1. However, it was confirmed that calcium stearate in the form of a powder could not be dispersed in the monomer composition and floated on the neutralization solution.

**Experimental Example 1: Measurement of pore size of super absorbent polymer**

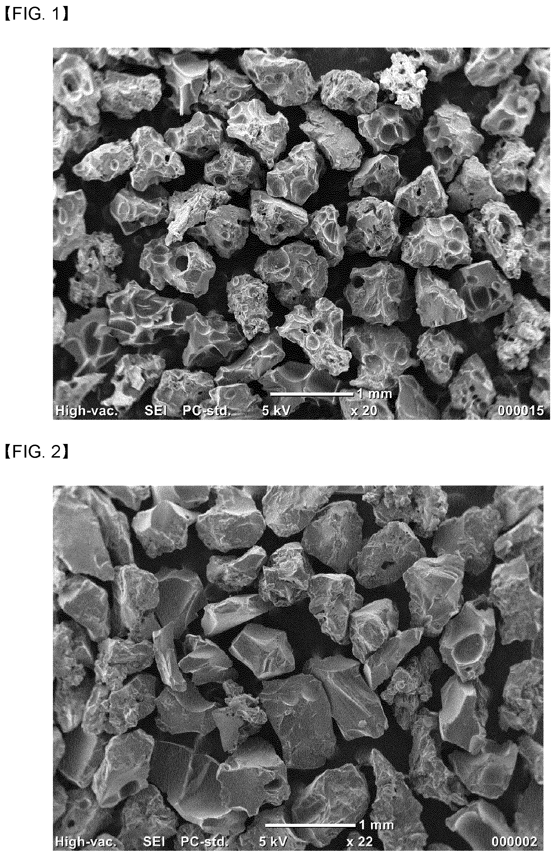

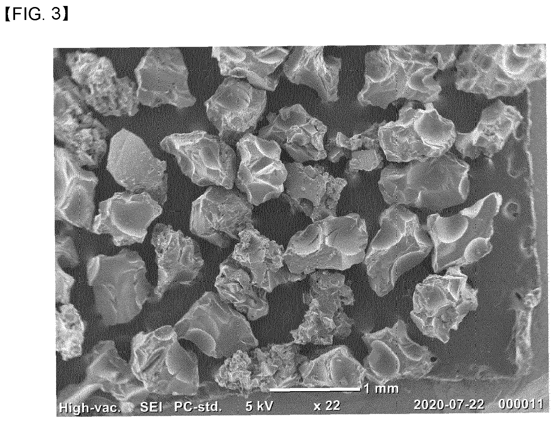

In order to confirm the pore structure of the super absorbent polymers prepared in Examples and Comparative Examples, internal images of the super absorbent polymer particles were taken at a magnification of 20 to 24 using a scanning electron microscope (SEM, product name: JCM-6000, manufacturer: JEOL). Specifically, the pore size of the super absorbent polymer was measured in the following manner, and images of Example 1, Comparative Example 1, and Comparative Example 2 are shown in FIGs. 1 to 3, respectively.

1) First, the super absorbent polymers of Examples were classified at 1.0 amplitude for 1 minute into individual particles having a particle diameter of 600 $\mu$m to 710 $\mu$m without damage to the particles using a particle classifier from Retsch, thereby obtaining 2 g of a sample.

2) Thereafter, the prepared sample particles were arbitrarily arranged and put on a SEM stage.

3) Subsequently, the sample particles arbitrarily arranged on the SEM stage were fixed with carbon tape, and a pore size formed on the surface of the super absorbent particles was measured at a magnification of 20 to 24. In this case, an average of 1,000 or more super absorbent polymer particles were selected, and a pore size was measured for 300 or more particles thereof in which pores were clearly visible. Herein, the criterion of 'pores are clearly visible' is as follows: assuming that the bubble is formed in a spherical shape, it is evaluated that it is most clearly visible when it has a nearly hemispherical shape on the surface of the super absorbent polymer particles through the pulverization process.

4) Subsequently, the pore sizes of 300 or more particles finally measured were obtained to statistically calculate the average diameter as a median value, and the results are shown in Table 1. In this case, the interquartile range was used to check the pore size distribution, which is to exclude measurement errors by the measurers and outliers.

Referring to FIGs. 1 to 3, it was confirmed in the super absorbent polymer of Example 1 that a plurality of pores having a diameter of 150 to 220 $\mu$m were uniformly formed, unlike in the super absorbent polymers of Comparative Examples 2 and 3.

**Experimental Example 2: Measurement of physical properties of super absorbent polymer**

The physical properties of super absorbent polymers prepared in Examples and Comparative Examples were evaluated in the following manner, and are shown in Table 1 below.

Unless otherwise indicated, all evaluations were conducted at room temperature (25 °C), and physiological saline or saline means a 0.9 wt% sodium chloride (NaCl) aqueous solution.

In addition, the tap water used in the evaluation of the following physical properties had an electrical conductivity of 170 to 180 $\mu$S/cm when measured using Orion Star A222 (manufactured by Thermo Scientific).

(1) Centrifuge retention capacity (CRC)

The centrifuge retention capacity by absorption ratio under a non-loading condition of each polymer was measured according to the EDANA WSP 241.3.

Specifically, after inserting $W_0$ (g, about 0.2 g) of the super absorbent polymer uniformly in a nonwoven fabric envelope and sealing the same, it was soaked in saline (0.9 wt%) at room temperature. After 30 minutes, the envelope was centrifuged at 250G for 3 minutes to drain, and the weight $W_2$ (g) of the envelope was measured. Further, after carrying out the same operation without using the resin, the weight $W_1$ (g) of the envelope was measured. Then, CRC (g/g) was calculated by using the obtained weight values according to the following Equation 2.

[Equation 2]

$$CRC\ (g/g) = \{[W_2(g) - W_1(g)]/W_0(g)\} - 2$$

(2) Absorbency under pressure (AUP)

The absorbency under pressure at 0.7 psi of each polymer was measured according to the EDANA WSP 242.3.

Specifically, a 400 mesh stainless steel screen was installed in a cylindrical bottom of a plastic having an inner diameter of 60 mm. $W_0$ (g, 0.90 g) of the super absorbent polymer was uniformly scattered on the screen at room temperature and a humidity of 50%. Thereafter, a piston which can uniformly provide a load of 0.7 psi was placed thereon. Herein, the outer diameter of the piston was slightly smaller than 60 mm, there was no gap with the inner wall of the cylinder, and jig-jog of the cylinder was not interrupted. At this time, the weight $W_3$ (g) of the device was measured.

Subsequently, a glass filter having a diameter of 90 mm and a thickness of 5 mm was placed in a petri dish having a diameter of 150 mm, and saline (0.9 wt% sodium chloride) was poured in the dish. At this time, the saline was poured until the surface level of the saline became equal to the upper surface of the glass filter. One sheet of filter paper with a diameter of 90 mm was placed thereon. After the measuring device was placed on the filter paper, the liquid was absorbed for 1 hour under a load. After 1 hour, the measuring device was lifted, and the weight $W_4$ (g) was measured.

Then, absorbency under pressure (g/g) was calculated by using the obtained weight values according to the following Equation 3.

[Equation 3]

$$AUP(g/g) = [W_4(g) - W_3(g)]/W_0(g) - 3$$

(3) Vortex time (Absorption rate)

The vortex time (absorption rate) of the super absorbent polymers of Examples and Comparative Examples was measured in the following manner.

① First, 50 mL of 0.9% saline was added to a 100 mL beaker with a flat bottom using a 100 mL Mass Cylinder.
② Next, after placing the beaker in the center of a magnetic stirrer, a circular magnetic bar (30 mm in diameter) was put in the beaker.
③ Thereafter, the stirrer was operated such that the magnetic bar stirred at 600 rpm, and the lowermost part of vortex generated by the stirring was made to reach the top of the magnetic bar.
④ After confirming that the temperature of the saline in the beaker reached 24.0 °C, $2\pm0.01$ g of a super absorbent polymer sample was added and a stopwatch was operated at the same time. Then, the time taken until the vortex disappeared and a surface of liquid became completely horizontal was measured in seconds, and this was taken as the vortex time.

(4) Measurement of shape parameters of super absorbent polymer particles

The aspect ratio and convexity were measured for the super absorbent polymers of Examples and Comparative Examples with morphologi 4 manufactured by Malvern Panalytical in the following method.

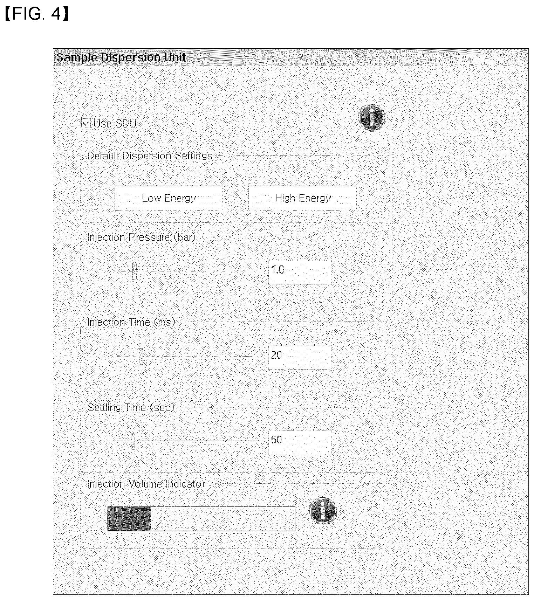

① Sample preparation: First, the super absorbent polymer was classified at 1.0 amplitude for 1 minute into individual particles having a particle diameter of 300 $\mu$m to 600 $\mu$m without damage to the particles using a particle classifier from Retsch, thereby obtaining 1 g of a sample. FIG. 4 shows Sample Dispersion Unit setting values at this time.

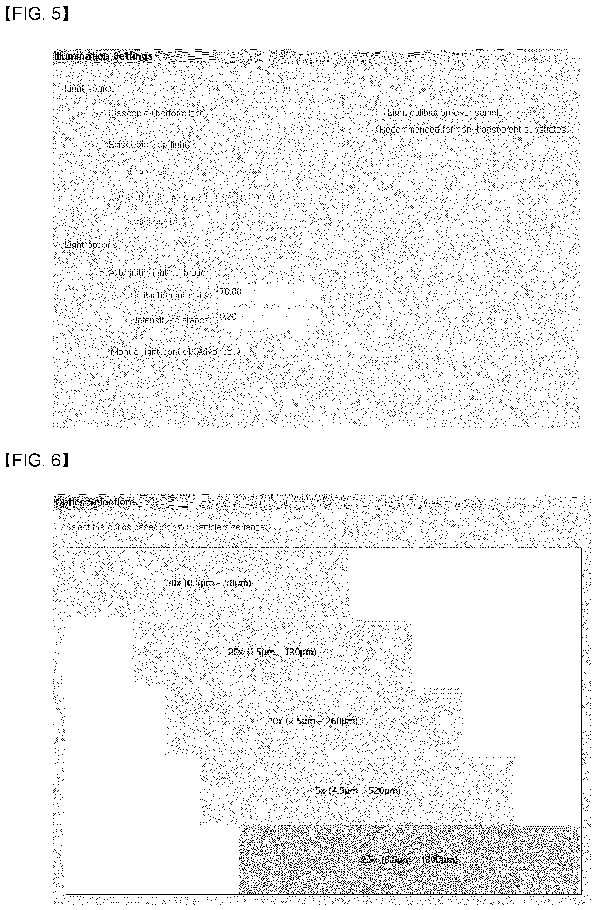

② Image capture: The prepared sample was set on a stage in the instrument, and scanned at 2.5 magnification to capture images of individual particles. At this time, Illunination setting value and Optics Selection setting value are shown in FIGs. 5 and 6, respectively.

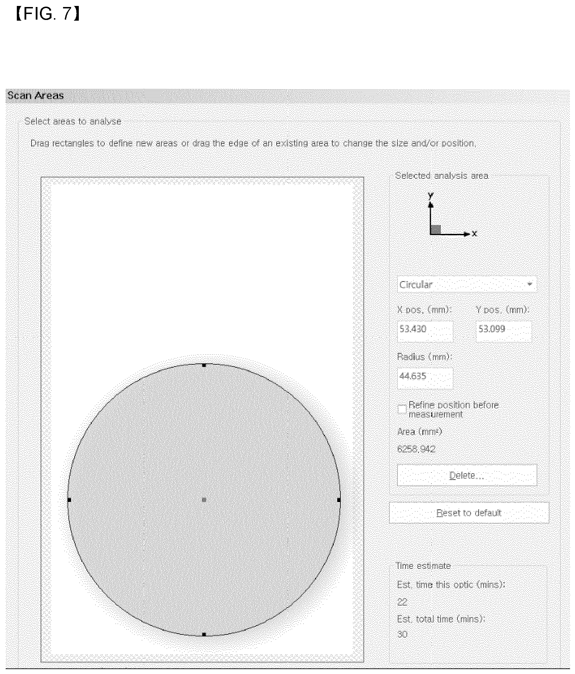

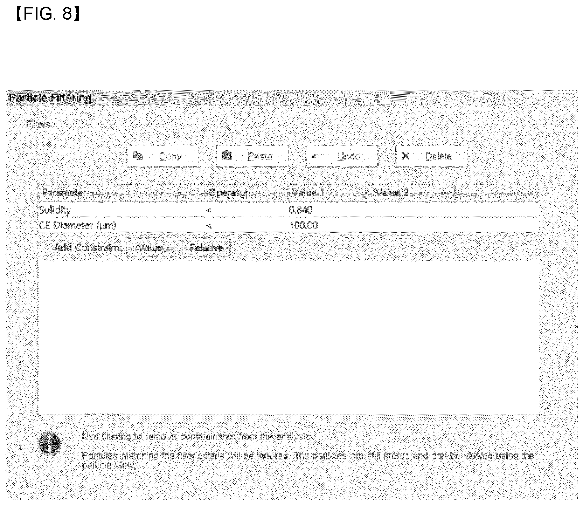

③ Image processing: For the captured images, parameter values such as the image captured as a 2D image of a 3D image of the 3D particle, CE diameter (Circle Equivalent diameter), shortest diameter, longest diameter, actual particle perimeter and convex hull perimeter were measured for each particle. At this time, Scan Area setting value and Particle Filtering setting value are shown in FIGs. 7 and 8, respectively.

④ A distribution of each parameter for all particles included in the sample was derived based on the analyzed data for each particle.

[Table 1]

| | Foaming agent | Type of foam stabilizer (avg. particle diameter, $\mu$m) | Properties of super absorbent polymer | | | | | |
|---|---|---|---|---|---|---|---|---|
| | | | A/R | Convexity | Avg. diameter of pore ($\mu$m) | CRC (g/g) | AUP (g/g) | Vortex time (sec) |
| Example 1 | SBC | Ca-st (5) | 0.78 | 0.89 | 170 | 27.8 | 25.2 | 38 |
| Example 2 | SBC | Mg-st (5) | 0.77 | 0.90 | 175 | 28.0 | 25.2 | 40 |
| Example 3 | SBC | Na-st (5) | 0.78 | 0.86 | 155 | 29.1 | 24.8 | 45 |
| Example 4 | SBC | K-st (5) | 0.77 | 0.86 | 145 | 28.4 | 25.0 | 45 |

(continued)

| | Foaming agent | Type of foam stabilizer (avg. particle diameter, $\mu$m) | Properties of super absorbent polymer | | | | | |
|---|---|---|---|---|---|---|---|---|
| | | | A/R | Convexity | Avg. diameter of pore ($\mu$m) | CRC (g/g) | AUP (g/g) | Vortex time (sec) |
| Example 5 | SBC | hydrophobic silica (10) | 0.79 | 0.87 | 190 | 28.2 | 25.2 | 44 |
| Example 6 | SBC | hydrophobic silica (20) | 0.80 | 0.86 | 210 | 28.5 | 25.2 | 43 |
| Example 7 | SBC | hydrophobic silica (30) | 0.75 | 0.86 | 190 | 28.2 | 25.4 | 40 |
| Comparative Example 1 | - | - | 0.72 | 0.91 | 450 | 28.5 | 23.7 | 68 |
| Comparative Example 2 | SBC | - | 0.70 | 0.88 | 350 | 28.8 | 23.0 | 56 |
| Comparative Example 3 | SBC | SDS | 0.72 | 0.86 | 290 | 28.2 | 23.4 | 43 |
| Comparative Example 4 | SBC | Ca-st powder | 0.70 | 0.88 | 330 | 29.0 | 23.4 | 58 |

As shown in Table 1 above, it could be seen that the super absorbent polymers of Examples in which the polymerization reaction of the monomer was performed in the presence of an aqueous dispersion of hydrophobic particles had an average value of an aspect ratio of 0.75 or more and an average value of convexity of 0.90 or less for the included particles, and simultaneously had a structure in which small and uniform pores were distributed, unlike the super absorbent polymers of Comparative Examples. Accordingly, it was confirmed that the super absorbent polymers of Examples exhibited improved absorbency and a significantly improved absorption rate compared to the super absorbent polymers of Comparative Examples.

**Claims**

1. A super absorbent polymer, comprising

a powder-type base resin comprising a cross-linked polymer of an acrylic acid-based monomer having at least partially neutralized acidic groups and an internal cross-linking agent; and
a surface cross-linked layer formed by further cross-linking the cross-linked polymer using a surface cross-linking agent on the base resin,
wherein the super absorbent polymer satisfies the following properties of

i) an average value of an aspect ratio (A/R), which is a ratio of the shortest diameter of a particle to the longest diameter of the particle measured for particles having a particle diameter of 300 $\mu$m to 600 $\mu$m, is 0.75 or more, and an average value of convexity calculated by the following Equation 1 is 0.9 or less, and
ii) a vortex time at 24.0 °C is 60 seconds or less:

[Equation 1]

Convexity = convex hull perimeter/actual particle perimeter

in Equation 1,

the convex hull perimeter is a length of an elastic band when it is assumed that an image obtained by capturing a 3D image of a 3D particle to be measured as a 2D image is surrounded by an imaginary elastic band extending around the outline, and
the actual particle perimeter is an actual perimeter of an image obtained by capturing a 3D image of a 3D particle to be measured as a 2D image.

2. The super absorbent polymer of Claim 1,
   wherein the super absorbent polymer has centrifuge retention capacity (CRC) measured according to the EDANA WSP 241.3 of 27 g/g or more, and absorbency under pressure (AUP) at 0.7 psi measured according to the EDANA WSP 242.3 of 23.5 g/g or more.

3. The super absorbent polymer of Claim 1,
   wherein the super absorbent polymer has a plurality of pores, and the plurality of pores have an average diameter of 10 $\mu$m to 400 $\mu$m.

4. The super absorbent polymer of Claim 1,
   wherein the super absorbent polymer comprises hydrophobic particles having an average particle diameter of 0.2 $\mu$m to 50 $\mu$m.

5. The super absorbent polymer of Claim 4,
   wherein the hydrophobic particles are at least one selected from the group consisting of hydrophobic silica, a metal salt of a C7 to C24 fatty acid, and hydrophobic organic particles.

6. The super absorbent polymer of Claim 5,
   wherein the metal salt of a C7 to C24 fatty acid is at least one metal salt of stearic acid selected from the group consisting of calcium stearate, magnesium stearate, sodium stearate, zinc stearate and potassium stearate.

7. A method for preparing a super absorbent polymer, comprising the steps of:

   preparing a monomer composition containing an acrylic acid-based monomer having at least partially neutralized acidic groups, and an internal cross-linking agent, (step 1);
   preparing a hydrogel polymer by cross-linking polymerization of the monomer composition in the presence of an aqueous dispersion of hydrophobic particles and a carbonate-based foaming agent (step 2);
   forming a powder-type base resin by drying and pulverizing the hydrogel polymer (step 3); and
   preparing a super absorbent polymer after forming a surface cross-linked layer by further cross-linking the surface of the base resin in the presence of a surface cross-linking agent (step 4),
   wherein the aqueous dispersion of hydrophobic particles is a colloidal solution in which hydrophobic particles having an average particle diameter of 0.2 $\mu$m to 50 $\mu$m are dispersed, and
   the super absorbent polymer satisfies the following properties of

   i) an average value of an aspect ratio (A/R), which is a ratio of the shortest diameter of a particle to the longest diameter of the particle measured for particles having a particle diameter of 300 $\mu$m to 600 $\mu$m, is 0.75 or more, and an average value of convexity calculated by the following Equation 1 is 0.9 or less, and
   ii) a vortex time at 24.0 °C is 60 seconds or less:

   [Equation 1]

   Convexity = convex hull perimeter/actual particle perimeter

   in Equation 1,

   the convex hull perimeter is a length of an elastic band when it is assumed that an image obtained by capturing a 3D image of a 3D particle to be measured as a 2D image is surrounded by an imaginary elastic band extending around the outline, and
   the actual particle perimeter is an actual perimeter of an image obtained by capturing a 3D image of a 3D particle to be measured as a 2D image.

8. The method for preparing a super absorbent polymer of Claim 7,
   wherein the hydrophobic particles are used in an amount of 0.001 to 5 parts by weight based on 100 parts by weight of the acrylic acid-based monomer.

9. The method for preparing a super absorbent polymer of Claim 7,
   wherein the carbonate-based foaming agent is at least one selected from the group consisting of sodium bicarbonate, sodium carbonate, potassium bicarbonate, potassium carbonate, calcium bicarbonate, calcium carbonate, magnesium bicarbonate and magnesium carbonate.

10. The method for preparing a super absorbent polymer of Claim 7,
wherein the carbonate-based foaming agent and the hydrophobic particles are used in a weight ratio of 1:0.1 to 1:4.

11. The method for preparing a super absorbent polymer of Claim 7,
wherein the aqueous dispersion of hydrophobic particles is a colloidal solution in which a metal salt of a C7 to C24 fatty acid is dispersed as the hydrophobic particles in the presence of a surfactant.

12. The method for preparing a super absorbent polymer of Claim 11,
wherein the surfactant comprises a nonionic surfactant and an anionic surfactant.

【FIG. 1】

High-vac. SEI PC-std. 5 kV x 20 000015

【FIG. 2】

High-vac. SEI PC-std. 5 kV x 22 000002

【FIG. 3】

【FIG. 4】

【FIG. 5】

**Illumination Settings**

Light source

○ Diascopic (bottom light)

○ Episcopic (top light)

○ Bright field

○ Dark field (Manual light control only)

□ Polariser/ DIC

□ Light calibration over sample

(Recommended for non-transparent substrates)

Light options

○ Automatic light calibration

Calibration intensity: 70.00

Intensity tolerance: 0.20

○ Manual light control (Advanced)

【FIG. 6】

**Optics Selection**

Select the optics based on your particle size range:

50x (0.5μm - 50μm)

20x (1.5μm - 130μm)

10x (2.5μm - 260μm)

5x (4.5μm - 520μm)

2.5x (8.5μm - 1300μm)

【FIG. 7】

【FIG. 8】

## INTERNATIONAL SEARCH REPORT

| International application No. |
|---|
| **PCT/KR2021/019249** |

### A.    CLASSIFICATION OF SUBJECT MATTER

**C08J 3/24**(2006.01)i; **C08J 3/12**(2006.01)i; **C08J 3/075**(2006.01)i; **C08J 9/00**(2006.01)i; **C08J 9/08**(2006.01)i; **C08F 20/06**(2006.01)i; **C08K 3/36**(2006.01)i; **C08K 5/098**(2006.01)i

According to International Patent Classification (IPC) or to both national classification and IPC

### B.    FIELDS SEARCHED

Minimum documentation searched (classification system followed by classification symbols)

C08J 3/24(2006.01); A61F 13/15(2006.01); A61L 15/60(2006.01); B01J 20/26(2006.01); C08F 20/06(2006.01); C08J 3/075(2006.01); C08J 3/12(2006.01); C08J 9/28(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고흡수성 수지(super absorbent polymer), 기포안정제(foam stabilizer), 콜로이드 (colloid)

### C.    DOCUMENTS CONSIDERED TO BE RELEVANT

| Category* | Citation of document, with indication, where appropriate, of the relevant passages | Relevant to claim No. |
|---|---|---|
| Y | WO 2011-040472 A1 (NIPPON SHOKUBAI CO., LTD.) 07 April 2011 (2011-04-07)<br>See claims 1-13; and paragraphs [0007]-[0328]. | 1-12 |
| Y | KR 10-2019-0069311 A (LG CHEM, LTD.) 19 June 2019 (2019-06-19)<br>See claims 1-12; paragraphs [0033]-[0207]; example 1; and table 1. | 1-12 |
| A | KR 10-0769976 B1 (NIPPON SHOKUBAI CO., LTD.) 25 October 2007 (2007-10-25)<br>See paragraphs [0042], [0059], [0066], [0093], [0098] and [0109]. | 1-12 |
| A | JP 2015-174971 A (INOAC GIJUTSU KENKYUSHO KK) 05 October 2015 (2015-10-05)<br>See entire document. | 1-12 |
| A | KR 10-2017-0033634 A (HANWHA CHEMICAL CORPORATION) 27 March 2017 (2017-03-27)<br>See entire document. | 1-12 |

| ☐ Further documents are listed in the continuation of Box C. | ☑ See patent family annex. |
|---|---|

\*    Special categories of cited documents:
"A"    document defining the general state of the art which is not considered to be of particular relevance
"D"    document cited by the applicant in the international application
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| **30 March 2022** | **31 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2021/019249**

| Patent document cited in search report | | | Publication date (day/month/year) | Patent family member(s) | | | Publication date (day/month/year) |
|---|---|---|---|---|---|---|---|
| WO | 2011-040472 | A1 | 07 April 2011 | CN | 102548654 | A | 04 July 2012 |
| | | | | CN | 105771945 | A | 20 July 2016 |
| | | | | EP | 2484439 | A1 | 08 August 2012 |
| | | | | EP | 2484439 | A4 | 19 February 2014 |
| | | | | JP | 2013-040472 | A1 | 28 February 2013 |
| | | | | JP | 2015-213911 | A | 03 December 2015 |
| | | | | JP | 5801203 | B2 | 28 October 2015 |
| | | | | JP | 6320968 | B2 | 09 May 2018 |
| | | | | US | 2012-0184670 | A1 | 19 July 2012 |
| | | | | US | 2015-0129799 | A1 | 14 May 2015 |
| | | | | US | 8952116 | B2 | 10 February 2015 |
| | | | | US | 9775927 | B2 | 03 October 2017 |
| KR | 10-2019-0069311 | A | 19 June 2019 | CN | 111433261 | A | 17 July 2020 |
| | | | | EP | 3708606 | A1 | 16 September 2020 |
| | | | | EP | 3708606 | A4 | 13 January 2021 |
| | | | | JP | 2021-505716 | A | 18 February 2021 |
| | | | | US | 2021-0069674 | A1 | 11 March 2021 |
| KR | 10-0769976 | B1 | 25 October 2007 | CN | 100519663 | C | 29 July 2009 |
| | | | | CN | 1697859 | A | 16 November 2005 |
| | | | | EP | 1592750 | A1 | 09 November 2005 |
| | | | | EP | 1592750 | A4 | 19 July 2006 |
| | | | | EP | 1592750 | B1 | 13 November 2013 |
| | | | | EP | 2650025 | A1 | 16 October 2013 |
| | | | | JP | 2004-261796 | A | 24 September 2004 |
| | | | | JP | 4364665 | B2 | 18 November 2009 |
| | | | | KR | 10-2005-0016324 | A | 21 February 2005 |
| | | | | US | 2005-0118423 | A1 | 02 June 2005 |
| | | | | US | 7282262 | B2 | 16 October 2007 |
| | | | | WO | 2004-069936 | A1 | 19 August 2004 |
| JP | 2015-174971 | A | 05 October 2015 | JP | 6257392 | B2 | 10 January 2018 |
| KR | 10-2017-0033634 | A | 27 March 2017 | | None | | |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200178431

- KR 1020210180490

**Non-patent literature cited in the description**

- **REINHOLD SCHWALM.** UV Coatings: Basics, Recent Developments and New Application. Elsevier, 2007, 115

- **ODIAN.** Principle of Polymerization. Wiley, 1981, 203